Europäisches Patentamt

European Patent Office

Office européen des brevets

(11) Publication number: **0 258 990**
**B1**

(12) **EUROPEAN PATENT SPECIFICATION**

(45) Date of publication of the patent specification:
19.12.90

(21) Application number: 87306543.7

(22) Date of filing: 23.07.87

(51) Int. Cl.⁵: **C08L 23/10,** C08L 23/04,
C08L 51/06, C09J 123/10,
C09J 123/04, C09J 151/06

(54) Adhesive blends and multi-layered structures comprising the adhesive blends.

(30) Priority: 30.07.86 GB 8618587

(43) Date of publication of application:
09.03.88 Bulletin 88/10

(45) Publication of the grant of the patent:
19.12.90 Bulletin 90/51

(84) Designated Contracting States:
AT BE CH DE ES FR GB GR IT LI LU NL SE

(56) References cited:
EP-A- 257 323
DE-A- 1 569 031
FR-A- 2 537 981
GB-A- 2 081 723
US-A- 4 394 485

(73) Proprietor: BP Chemicals Limited, Belgrave
House 76 Buckingham Palace Road, London,
SW1W 0SU(GB)

(72) Inventor: Hope, Philip Stephen, c/o BP Chemicals
Limited, Bo'Ness Road, Grangemouth, Stirlingshire,
FK3 9XH, Scotland(GB)
Inventor: Malley, Peter John, c/o BP Chemicals Limited,
Bo'Ness Road, Grangemouth, Stirlingshire, FK3 9XH,
Scotland(GB)

(74) Representative: Hymers, Ronald Robson et al, BP
INTERNATIONAL LIMITED Patents Division Chertsey
Road, Sunbury-on-Thames Middlesex, TW16 7LN(GB)

ACTORUM AG

## Description

The present invention relates to polyolefin-containing adhesive blends and multi-layered structures comprising the adhesive blends.

Polyolefin-containing blends suitable for use as adhesive layers in multi-layered structures are known. For example, UK Patent GB-B 2 081 723 discloses a modified polyolefin adhesive blend comprising (A) a graft copolymer of a polyethylene back-bone grafted with at least one polymerisable ethylenically unsaturated carboxylic acid or carboxylic acid anhydride and (B) a blending resin mixture comprising a linear low density polyethylene and polypropylene. The patent states that the adhesive blends can be used to join polypropylene to a number of polar materials or to join two polar materials together.

European Patent Application 0 257 323 discloses an adhesive blend suitable for adhesion to polypropylene and gas barrier materials which blend comprises a mixture of:

(a) a substantially non-elastomeric copolymer of propylene and ethylene wherein said ethylene comprises at least about 5 wt.% of said copolymer;

(b) about 0.1 to 30 wt.% of said blend of a non-elastomeric copolymer of propylene and a comonomer comprising at least one polymerizable ethylenically unsaturated carboxylic acid or acid derivative; and

(c) an adhesive-promoting effective amount of an ethylene homopolymer having a specific gravity in the range of about 0.915-0.930, inclusive, a melt index of less than aboutldg/min as measured at 190°C, and a narrow molecular weight distribution as measured by a ratio of weight average molecular weight (Mw) to number average molecular weight (Mn) of about 3 to 5, inclusive.

The application which was published on 2nd March 1988 discloses that inferior results are obtained when component (c) is replaced by a linear low density polyethylene with a melt index of 2. The polypropylene used in this comparative example was a random ethylene/propylene copolymer having about 6 to 8 wt.% ethylene in the polymer chain.

The present invention provides an improved polyolefin-containing adhesive blend and in particular it provides an adhesive blend suitable for bonding polypropylene to a polar substrate which blend has improved adhesion to polypropylene while maintaining good adhesion to the polar substrate.

Thus, according to the present invention a polyolefincontaining adhesive blend comprises;

(A) 10 to 30 parts by weight of a graft copolymer of a polypropylene backbone grafted with 0.001 to 30% by weight of at least one polymerisable ethylenically unsaturated carboxylic acid or derivative thereof

(B) 10 to 50 parts by weight of a linear low density polyethylene and

(C) 20 to 80 parts by weight of polypropylene, the sum of (A), (B) and (C) being 100 parts by weight.

The polypropylene used as the backbone of the graft copolymer (A) and the polypropylene blending component (C) can be the same or different and can be a homopolymer or a copolymer of propylene with ethylene, butene or other unsaturated aliphatic hydrocarbons. Such homopolymers and copolymers are known and any such polymer can be used. Blends of two or more polypropylenes can be used. Preferably, if the polypropylene is a copolymer it comprises at least 80% of polymerised propylene units.

Linear low density polyethylenes are well known and are copolymers of ethylene with one or more higher alpha-olefin such as propylene, butene-1, hexene-1 and octene-1. They can be prepared by known low pressure processes. A mixture of two or more linear low density polyethylenes can be used in the adhesive blend according to the present invention.

Polymerisable ethylenically unsaturated carboxylic acids and derivatives thereof include, for example, acrylic acid, methacrylic acid, maleic acid, itaconic acid, citraconic acid, mesaconic acid, maleic anhydride, 4-methyl cyclohex-4-ene-1,2-dicarboxylic acid anhydride, bicyclo (2.2.2) oct-5-ene-2,3-dicarboxylic acid anhydride, 1,2,3,4,5,8,9,10-octahydronaphthalene- 2,3 dicarboxylic acid anhydride, 2-oxa-1,3-diketospiro (4.4) non-7-ene, bicyclo (2.2.1) hept-5-ene-2, 3-dicarboxylic acid anhydride, maleopimaric acid, tetrahydrophthalic anhydride, x-methyl-bicyclo (2.2.1) hept-5-ene -2,3-dicarboxylic acid anhydride, x-methyl-norborn-5-ene- 2, 3-dicarboxylic acid anhydride, norborn-5-ene- 2, 3-dicarboxylic acid anhydride. Preferably, maleic anhydride is used. When maleic anhydride is used as the polymerisable ethylenically unsaturated carboxylic acid anhydride, the amount which is graft copolymerised with the polypropylene backbone is typically from 0.01 to 5% by weight.

Co-grafting monomers such as, for example, those described in US Patent 3882194 may also be used for preparing the graft copolymers of the present invention.

Methods for preparing graft copolymers are well known and any suitable method can be used to prepare the graft copolymer of polypropylene and polymerisable ethylenically unsaturated carboxylic acid or derivative thereof. One such suitable method comprises blending together the polypropylene and the polymerisable ethylenically unsaturated carboxylic acid or derivative thereof in the presence of a free radical initiator, such as an organic peroxide or hydroperoxide, at a temperature which is above the melting point of the polypropylene and which provides a suitable half-life of the free radical initiator. Suitable free radical initiators are well known. This grafting process can be carried out using known mixing equipment such as, for example, a Brabender mixer, a Banbury mixer or a roll mill. Preferably, the grafting process is carried out in a closed vessel. A convenient method of preparing the graft copolymer is therefore to extrude the polymer backbone, polymerisable ethylenically unsaturated carboxylic acid or derivative thereof and an organio peroxide or hydroperoxide through a single or multiple screw extruder.

The blends of the graft polypropylene, linear low density polyethylene and polypropylene can be prepared using known techniques and equipment for batch or continuous blending.

The adhesive blends according to the present invention may also contain additives conventionally used in such compositions such as, for example, antioxidants.

The polyolefin-containing adhesive blends according to the present invention are particularly suitable for bonding polypropylene to a polar material such as, for example, nylon and ethylene vinyl alcohol copolymers. Methods for using adhesive compositions to bond polypropylene to polar substrates are known and include lamination, coextrusion, extrusion lamination and coextrusion coating. A preferred use of the polyolefin-containing adhesive blends according to the present invention is to produce multi-layered structures which comprise a layer of polypropylene and a layer of a polar material, particularly ethylene vinyl alcohol, bonded together with a layer of the polyolefin-containing adhesive blend according to the present invention.

The present invention includes multi-layered structures comprising a first layer comprising a polypropylene composition and a second layer comprising a polar material, the first and second layers being bonded together with an intermediate layer of a polyolefin-containing adhesive blend according to the present invention. In particular, the present invention relates to such multi-layered structures when prepared by co-extrusion e.g. multi-layered film produced by co-extrusion. The polypropylene layer can by any layer comprising a major proportion of a homo-polypropylene or copolymer of propylene. Preferably, the polypropylene layer comprises at least 70% by weight of polymerised propylene units. The second layer comprising a polar material is preferably a layer comprising a major proportion of a polar material selected from the group comprising nylon and ethylene-vinyl alcohol copolymers.

The multi-layered structures according to the present invention can include further layers in addition to the three layers hereinbefore defined. For example, a five-layered structure can comprise a first layer of polypropylene, a second layer of an adhesive composition according to the present invention, a third layer of an ethylene-vinyl alcohol copolymer, a fourth layer of an adhesive composition according to the present invention and a fifth layer of polypropylene.

It has been found that the use of polyolefin-containing adhesive blends of the present invention to produce multi-layered film provides a satisfactory bond when the film is subsequently thermoformed, i.e. the film does not have a tendency to delaminate after thermoforming, e.g. into containers. The present invention includes articles produced by thermoforming a multi-layered film comprising a first layer comprising a polypropylene composition and a second layer comprising a nylon composition or an ethylene-vinyl alcohol copolymer composition, the first layer and the second layer being bonded together by an intermediate layer of the polyolefin-containing adhesive blend according to the present invention.

The invention is illustrated by the following examples:

Example 1

A polypropylene/maleic anhydride graft copolymer was prepared by reacting together polypropylene and maleic anhydride in the presence of dicumyl peroxide. The polypropylene used was a powder grade of polypropylene supplied by BP Chemie under the trade name Napryl 62200AP. (NAPRYL is a registered trade mark). The polypropylene contained antioxidants. The grafting reaction was carried out by mixing for 10 minutes in a Brabender Plasti-corder at 180°C and 60 rpm. (BRABENDER and PLASTI-CORDER are registered trade marks). The amount of maleic anhydride used was 1.0% by weight based on the combined weight of maleic anhydride and polypropylene. The amount of dicumyl peroxide used was 0.2% based on the total weight of the reactants.

Polyolefin-containing compositions were prepared by blending different amounts of the polypropylene-maleic anhydride graft copolymer prepared as described above and polypropylene with 30 parts by weight of a linear low density polyethylene. The compositions were prepared by mixing the different amounts of the components for 10 minutes in a Brabender Plasti-corder at 180°C and 60 rpm to form homogeneous mixtures. The polypropylene was the same as that used as the backbone of the graft copolymer. The linear low density polyethylene had a melt index of 2.5dg/min (ISO R 292, 190°C, 2.16kg), a density of 0.920 g/cm$^3$ (ISO R 1872B) and contained approximately 2000 ppm by weight of conventional antioxidants. The proportions of the components for each composition are given in Table 1 in parts by weight. Compositions 1, 2 and 3 are polyolefin-containing adhesive blends according to the present invention. Compositions A to E are comparative compositions outside the scope of the invention.

The strength of the adhesive bond between each of the polyolefin-containing compositions and (A) ethylene vinyl alcohol (EVOH) and (B) polypropylene was determined using an Instron Universal Testing Machine.

Sandwich mouldings were prepared comprising either two EVOH layers separated by a layer of the polyolefin-containing composition to be tested or two polypropylene layers separated by a layer of the polyolefin-containing composition to be tested. All of the sandwich mouldings were prepared by compression moulding separate sheets of the materials each of which measured 150 mm x 150 mm x 120 microns (µm). The sandwich compression moulding was carried out by preheating the mould to 200°C placing the required three sheets of material in the mould, heating to 200°C for 30 seconds under no pressure, increasing the load to 10 long tons (10.16) for 10 seconds and then cooling under load. The sandwich mouldings were then cut into 25 mm wide strips and the average force required to separate an EVOH layer or polypropylene layer from the sandwich measured using an Instron Universal Testing Machine at a crosshead speed of 100mm/min. The peel strength i.e. the steady state load during peel, expressed as g/mm of sample width was determined for several strips.

The average peel strengths to EVOH and polypropylene for each of the compositions are given in Table 1. For all of the compositions tested the adhesive strength to polypropylene was so high that the polypropylene layer could not be peeled from the composition. However, the peel strengths to EVOH of the compositions according to the present invention (Compositions 1, 2 and 3) were significantly higher than the peel strengths to EVOH of the comparative compositions (Compositions A to E).

EP 0 258 990 B1

## Table 1

| Composition | Maleic Anhydride Grafted Polypropylene | Polypropylene | Linear Low density polyethylene | Average Peel Strength(g/mm) | |
|---|---|---|---|---|---|
| | | | | EVOH | Polypropylene |
| A | 0 | 70 | 30 | 1 | * |
| 1 | 10 | 60 | 30 | 99 | * |
| 2 | 20 | 50 | 30 | >100 | * |
| 3 | 30 | 40 | 30 | 52 | * |
| B | 40 | 30 | 30 | 29 | * |
| C | 50 | 20 | 30 | 5 | * |
| D | 60 | 10 | 30 | 8 | * |
| E | 70 | 0 | 30 | 13 | * |

* polypropylene could not be peeled from the adhesive layer.

Examples 2 to 4

A polypropylene/maleic anhydride graft copolymer was prepared by reacting together polypropylene and maleic anhydride in the presence of dicumyl peroxide. The polypropylene used was a powder grade polypropylene supplied by BP Chemie under the trade name Napryl 62040 AP (NAPRYL is a registered trade mark). Napryl 62040AP has a lower melt index than the polypropylene used in Example 1. The polypropylene contained antioxidants. The grafting reaction was carried out by mixing the components for 10 minutes in a 1 kg capacity Banbury mixer operating at a speed of 120 rpm with steam being applied to both the rotors and jackets. The amount of maleic anhydride used was 1.0% by weight based on the combined weight of maleic anhydride and polypropylene. The amount of dicumyl peroxide used was 0.2% by weight based on the total weight of the reactants.

Three adhesive compositions according to the present invention were prepared by blending the maleic anhydride grafted polypropylene with a linear low density polyethylene and a polypropylene. The linear low density polyethylene was the same as that used in Example 1. The polypropylene was either the same as that used as the backbone for the grafted polypropylene i.e. Napryl 62040AP or the same as that used in Example 1 i.e. Napryl 62200AP. The blending was carried out in a Werner and Pfleiderer ZSK 30 twin screw extruder. During the blending, additional quantities of antioxidants were added. The extruder barrel temperature was set at 180°C, the screw speed was 100 rpm and the output rate was 4 kg/h.

Sandwich mouldings were prepared as described in Example 1 using the adhesive compositions produced and the adhesion to both EVOH and polypropylene was determined in the same manner as described in Example 1.

The compositions of the three adhesive compositions and the peel strengths of the composition to EVOH and polypropylene are given in Table 2.

## Table 2

| EXAMPLE | Composition (parts by weight) | | | | Average Peel Strength (g/mm) | |
|---|---|---|---|---|---|---|
| | Maleic Anhydride Grafted Polypropylene | Linear Low Density Polyethylene | Polypropylene | | | |
| | | | Napryl 62200AP | Napryl 62040AP | EVOH | Polypropylene |
| 2 | 20 | 30 | 50 | – | 100 | * |
| 3 | 20 | 30 | – | 50 | 101 | 160 – 240 |
| 4 | 20 | 20 | 60 | – | 160 | * |

* polypropylene could not be peeled from the adhesive layer.

EP 0 258 990 B1

## Examples 5 to 7

The three adhesive compositions produced in Examples 2 to 4 were used to prepare multi-layered film by coextrusion. Each multi-layered film comprised a first 650 micron thick layer of polypropylene, a second 30 micron thick layer of the adhesive composition, a third 70 micron thick layer of EVOH, a fourth 30 μm thick layer of the adhesive composition and a fifth 550 μm thick layer of polypropylene. Samples of the film were subjected to the peel test as described in Example 1 to determine the force required to peel the outer polypropylene layers from the multi-layered film. The force required when the adhesive layer comprised the adhesive blend produced in Example 2 was from 40 to 80 g/mm. The force required when the adhesive layer comprised the adhesive blend produced in Example 3 was from 50 to 200 g/mm. When the adhesive film was that produced in Example 4, the polypropylene layers could not be peeled from the multilayer film.

## Example 8

A polypropylene/maleic anhydride graft copolymer was prepared by reacting together polypropylene and maleic anhydride in the presence of dicumyl peroxide. The polypropylene used was the same as used in Example 3 i.e. Napryl 62040 AP. The amount of maleic anhydride used was 1.0% by weight based on the combined weight of maleic anhydride and polypropylene. The amount of dicumyl peroxide used was 0.2% by weight based on the total weight of the reactants. The grafting reaction was carried out in a Buss Ko-kneader PR46 with the barrel temperature set at 160°C and operated at a hopper setting of 4, a kneader screw setting of 8 and a transverse screw setting of 10 which gave an output of 7kg/hr.

20 parts by weight of the polypropylene/maleic anhydride graft copolymer was blended with 30 parts by weight of the same linear low density polyethylene used in Example 1 and 50 parts by weight of polypropylene. The polypropylene was the same as that used as the backbone for the grafted polypropylene, i.e. Napryl 62040AP. The blending was carried out in a Werner and Pfleiderer ZSK 30 twin screw extruder. During the blending, additional quantities of antioxidants were added. The extruder barrel temperature was set at 200°C and the screw speed was 150 rpm. The output rate was about 5 to 6 kg/hr.

Sandwich mouldings were prepared as described in Example 1 and the adhesion to both EVOH and polypropylene was determined by measuring the peel strengths using the technique described in Example 1. The adhesion to polypropylene was so great that the polypropylene layer could not be peeled from the composition. The average peel strength to EVOH was 170g/mm.

## Example 9

Example 8 was repeated except that the amount of dicumyl peroxide used was 1.0% by weight and the Buss Ko-kneader was operated at a hopper setting of 1, a kneader screw setting of 1 giving an output of 5 kg/hr. The average peel strength of the composition to EVOH was 180 g/mm.

## Examples 10 to 11

The two adhesive compositions produced in Examples 8 and 9 were used to prepare multi-layered film by coextrusion. Each multi-layered film comprised a first 550 μm thick layer of polypropylene, a second 30 μm thick layer of the adhesive composition, a third 60 μm thick layer of EVOH, a fourth 30 μm thick layer of the adhesive composition and a fifth 550 μm thick layer of polypropylene. (All thicknesses are approximate.) Samples of the film were subjected to the peel test as described in Example 1 to determine the force required to peel the outer polypropylene layers from the multi-layered film. The force required when the adhesive layer comprised the adhesive blend produced in Example 9 was from 120 to 210 g/mm. The force required when the adhesive layer comprised the adhesive blend produced in Example 8 was from 180 to 260 g/mm. The multi-layered film was used to manufacture containers using a thermoforming process. There was no visible delamination.

## Example 12

Example 8 was repeated except that the non-grafted polypropylene used was a propylene/ethylene random copolymer having a melt index of 0.7 dg/min (230°C, 2.16kg) and a density of 0.905 g/cm³. The peel strength to EVOH was determined according to the test method described in Example 1 and values in excess of 150g/mm were obtained.

## Example 13

Example 9 was repeated except that the non-grafted polypropylene used was the same propylene/ethylene random copolymer as used in Example 12. The adhesive blend was used to make a multi-layered film by co-extrusion as described in Examples 10 and 11. The force required to peel the outer polypropylene layers from the multi-layered film was from 115 to 180 g/mm. The multi-layered film was used to manufacture containers by a thermoforming process. There was no visible delamination in the containers.

Example 14

Example 13 was repeated except that the propylene/ethylene random copolymer had a melt index of 6 dg/min (230°C, 2.16 kg) and a density of 0.9 g/cm³. The force required to peel the outer polypropylene layers from the multi-layered film made using the adhesive blend was from 110 to 310 g/mm. The multi-layered film was used to manufacture containers by thermoforming without visible delamination of the film.

Example 15

Example 8 was repeated except that the polypropylene backbone of the polypropylene/maleic anhydride graft copolymer and the non-grafted polypropylene were both a propylene/ethylene random copolymer having a melt index of 0.7 dg/min (230°C, 2.16 kg) and a density of 0.905 g/cm³. The adhesive blend was used to make a multi-layered film by coextrusion as described in Examples 10 and 11. The force required to peel the outer layers of polypropylene from the multi-layered film was determined, using the test method described in Example 1, to be from 90 to 250 g/mm.

Example 16

An adhesive blend according to the present invention was prepared by blending together 10 parts by weight of polypropylene/maleic anhydride graft copolymer, 45 parts by weight of a propylene/ethylene block copolymer and 45 parts by weight of a linear low density polyethylene. The polypropylene/maleic anhydride graft copolymer and linear low density polyethylene were the same as those used in Example 1. The propylene/ethylene block copolymer had a melt index of 2 dg/min (230°C, 2.16 kg). The composition was prepared substantially as described in Example 1. The average peel strength to EVOH and polypropylene were measured using the test procedure described in Example 1. The results are given in Table 3.

Comparative Composition F

Example 16 was repeated except that a polyethylene/maleic anhydride graft copolymer was used in place of the polypropylene/maleic anhydride graft copolymer. The polyethylene backbone was a high density polyethylene having a melt index of 4.5 dg/min (190°C, 2.16 kg) and a density of 0.950g/cm³. The polyethylene/maleic anhydride graft copolymer was prepared in the same manner as the polypropylene/maleic anhydride graft copolymer used in Example 1. The blend with the same linear low density polyethylene and propylene/ethylene block copolymer as used in Example 16 was prepared in the same manner as the compositions of Example 1. the average peel strengths to EVOH and polypropylene were measured using the test procedure described in Example 1. The results are given in Table 3.

Table 3

| | Ex.16. | Comparative Composition F |
|---|---|---|
| Composition (parts by weight) | | |
| Polypropylene/maleic anhydride graft copolymer | 10 | 0 |
| Polyethylene/maleic anhydride graft copolymer | 0 | 10 |
| Linear low density polyethylene | 45 | 45 |
| Propylene/ethylene block copolymer | 45 | 45 |
| Peel Strengths (g/mm) | | |
| EVOH | 55 | 2 |
| Polypropylene | 73 | 36 |

The results in Table 3 show that the adhesive blend containing polypropylene/maleic anhydride graft copolymer had greater adhesion to both EVOH and polypropylene than the similar comparative composition containing polyethylene/maleic anhydride graft copolymer

**Claims for the Contracting States: AT, BE, CH, ES, GR, LI, LU, SE**

1. A polyolefin-containing adhesive blend comprising;
(A) 10 to 30 parts by weight of a graft copolymer of a polypropylene backbone grafted with 0.001 to 30% by weight of at least one polymerisable ethylenically unsaturated carboxylic acid or derivative thereof,
(B) 10 to 50 parts by weight of a linear low density polyethylene and
(C) 20 to 80 parts by weight of polypropylene
the sum of (A), (B) and (C) being 100 parts by weight

2. A polyolefin-containing adhesive blend as claimed in claim 1 in which the polymerisable ethylenically unsaturated carboxylic acid or derivative thereof is selected from the group consisting of acrylic acid, methacrylic acid, maleic acid, itaconic acid, citraconic acid, mesaconic acid, 4-methyl cyclohex-4-ene-1, 2-dicarboxylic acid anhydride, bicyclo (2.2.2) oct-5-ene-2, 3-dicarboxylic acid anhydride, 1, 2, 3, 4, 5, 8, 9, 10-octahydro-naphthalene-2, 3 dicarboxylic acid anhydride, 2-oxa-1, 3-di keto spiro (4.4) non-7-ene, bicyclo (2.2.1) hept-5-ene-2, 3-dicarboxylic acid anhydride, maleopimaric acid, tetrahydrophthalic anhydride, x-methyl-bicyclo (2.2.1) hept-5-ene-2, 3-dicarboxylic acid anhydride, x-methylnorborn-5-ene-2, 3-dicarboxylic acid anhydride, norborn-5-ene-2, 3-dicarboxylic acid anhydride.

3. A polyolefin-containing adhesive blend as claimed in claim 1 in which the polymerisable ethylenically unsaturated carboxylic acid or derivative thereof is maleic anhydride.

4. A multi-layered structure comprising a first layer comprising a polypropylene composition and a second layer comprising a polar material, the first layer and the second layer being bonded together with an intermediate layer of a polyolefin-containing adhesive blend as claimed in any one of claims 1 to 3.

5. A multi-layered structure as claimed in claim 4 in which the multi-layered structure is a film produced by co-extrusion.

6. A multi-layered structure as claimed in claim 4 or claim 5 in which the second layer comprising a polar material comprises a major proportion of a polar material selected from the group consisting of nylon and ethylene-vinyl alcohol copolymers.

7. A multi-layered structure comprising a first layer comprising a homopolymer or copolymer of propylene and a second layer comprising an ethylene vinyl alcohol copolymer, the first layer and the second layer being bonded together with an adhesive blend comprising;
(A) 10 to 30 parts by weight of a graft copolymer of a polypropylene backbone grafted with 0.01 to 5% by weight of maleic anhydride,
(B) 10 to 50 parts by weight of a linear low density polyethylene and
(C) 20 to 80 parts by weight of polypropylene
the sum of (A), (B) and (C) being 100 parts by weight.

8. A multi-layered structure comprising a first layer comprising a homopolymer or copolymer of propylene, a second layer of an adhesive composition, a third layer of an ethylene-vinyl alcohol copolymer, a fourth layer of an adhesive composition and a fifth layer of a homopolymer or copolymer of propylene in which the adhesive composition is a polyolefin-containing adhesive blend as claimed in any one of claims 1 to 3.

9. An article produced by thermoforming a multi-layered film which film comprises a first layer comprising a polypropylene composition and a second layer comprising a nylon composition or an ethylene-vinyl alcohol copolymer composition, the first layer and second layer being bonded together by an intermediate layer of a polyolefin-containing adhesive blend as claimed in any one of claims 1 to 3.

**Claims for the Contracting States: DE, FR, GB, IT, NL**

1. A polyolefin-containing adhesive blend comprising:
(A) 10 to 30 parts by weight of a Braft copolymer of a polypropylene backbone grafted with 0.001 to 30% by weight of at least one polymerisable ethylenically unsaturated carboxylic acid or derivative thereof,
(B) 10 to 50 parts by weight of a linear low density polyethylene and
(C) 20 to 80 parts by weight of polypropylene other than a random ethylene/propylene copolymer wherein the ethylene comprises at least about 5 wt% of said copolymer the sum of (A), (B) and (C) being 100 parts by weight

2. A polyolefin-containing adhesive blend as claimed in claim 1 in which the polymerisable ethylenically unsaturated carboxylic acid or derivative thereof is selected from the group consisting of acrylic acid, methacrylic acid, maleic acid, itaconic acid, citraconic acid, mesaconic acid, 4-methyl cyclohex-4-ene-1,2-dicarboxylic acid anhydride, bicyclo (2.2.2) oct-5-ene-2,3-dicarboxylic acid anhydride, 1,2,3,4,5,8,9,10-octahydro-naphthalene-2,3 dicarboxylic acid anhydride, 2-oxa-1,3-di keto spiro (4.4) non-7-ene, bicyclo (2.2.1) hept-5-ene-2,3-dicarboxylic acid anhydride, maleopimaric acid, tetrahydrophthalic anhydride, x-methyl-bicyclo (2.2.1) hept-5-ene-2,3-dicarboxylic acid anhydride, x-methylnorborn-5-ene-2,3-dicarboxylic acid anhydride, norborn-5-ene-2,3-dicarboxylic acid anhydride.

3. A polyolefin-containing adhesive blend as claimed in claim 1 in which the polymerisable ethylenically unsaturated carboxylic acid or derivative thereof is maleic anhydride.

4. A polyolefin-containing adhesive blend as claimed in any one of claims 1 to 3 in which the polypropylene is a homopolymer.

5. A polyolefin-containing adhesive blend as claimed in any one of claims 1 to 3 in which the polypropylene is a propylene/ethylene block copolymer having a melt index of 2 dg/min (230°C, 2.16 kg).

6. A polyolefin-containing adhesive blend as claimed in any one of claims 1 to 3 in which the polypropylene is a propylene/ethylene random copolymer having a melt index of 0.7 dg/min (230°C, 2.16 kg) and a density of $0.905 g/cm^3$ or a propylene/ethylene random copolymer having a melt index of 6 dg/min (230°C, 2.16kg) and a density of $0.9 g/cm^3$.

7. A multi-layered structure comprising a first layer comprising a polypropylene composition and a second layer comprising a polar material, the first layer and the second layer being bonded together with an intermediate layer of a polyolefin-containing adhesive blend as claimed in any one of claims 1 to 6.

8. A multi-layered structure as claimed in claim 7 in which the multi-layered structure is a film produced by co-extrusion.

9. A multi-layered structure as claimed in claim 7 or claim 8 in which the second layer comprising a polar material comprises a major proportion of a polar material selected from the group consisting of nylon and ethylene-vinyl alcohol copolymers.

10. A multi-layered structure comprising a first layer comprising a homopolymer or copolymer of propylene and a second layer comprising an ethylene vinyl alcohol copolymer, the first layer and the second layer being bonded together with an adhesive blend comprising;

(A) 10 to 30 parts by weight of a graft copolymer of a polypropylene backbone grafted with 0.01 to 5% by weight of maleic anhydride,

(B) 10 to 50 parts by weight of a linear low density polyethylene and

(C) 20 to 80 parts by weight of polypropylene other than a random ethylene/propylene copolymer wherein the ethylene comprises at least about 5 wt% of said copolymer the sum of (A), (B) and (C) being 100 parts by weight.

11. A multi-layered structure comprising a first layer comprising a homopolymer or copolymer of propylene, a second layer of an adhesive composition, a third layer of an ethylene-vinyl alcohol copolymer, a fourth layer of an adhesive composition and a fifth layer of a homopolymer or copolymer of propylene in which the adhesive composition is a polyolefin-containing adhesive blend as claimed in any one of claims 1 to 6.

12. An article produced by thermoforming a multi-layered film which film comprises a first layer comprising a polypropylene composition and a second layer comprising a nylon composition or an ethylene-vinyl alcohol copolymer composition, the first layer and second layer being bonded together by an intermediate layer of a polyolefin-containing adhesive blend as claimed in any one of claims 1 to 6.

## Patentansprüche für die Vertragsstaaten: DE, FR, GB, IT, NL

1. Polyolefin-enthaltende Klebstoffmischung, umfassend:

(A) 10 bis 30 Gewichtsteile eines Pfropfcopolymers eines Polypropylengerüsts gepfropft mit 0,001 bis 30 Gew.-% wenigstens einer polymerisierbaren, ethylenartig-ungesättigten Carbonsäure oder einem Derivat davon,

(B) 10 bis 50 Gewichtsteile eines linearen Polyethylens niedriger Dichte und,

(C) 20 bis 80 Gewichtsteile Polypropylen, das kein Zufalls-Ethylen/Propylencopolymer ist, worin das Ethylen wenigstens etwa 5 Gew.-% dieses Copolymers umfaßt, wobei die Summe von (A), (B) und (C) 100 Gewichtsteile ergibt.

2. Polyolefin-enthaltende Klebstoffmischung nach Anspruch 1, worin die polymerisierbare, ethylenartig-ungesättigte Carbonsäure oder das Derivat davon ausgewählt ist aus der Gruppe bestehend aus Acrylsäure, Methacrylsäure, Maleinsäure, Itakonsäure, Citraconsäure, Mesaconsäure, 4-Methylcyclohex-4-en-1,2-dicarbonsäureanhydrid, Bicyclo (2.2.2) okt-5-en-2,3-dicarbonsäureanhydrid, 1,2,3,4,5,8,9,10-Oktahydro-naphthalen-2,3-dicarbonsäureanhydrid, 2-Oxa-1,3-diketospiro (4.4) non-7-en, Bicyclo (2.2.1) hept-5-en-2,3-dicarbonsäureanhydrid, Maleopimarsäure, Tetrahydrophthalsäureanhydrid, x-Methyl-bicyclo (2.2.1) hept-5-en-2,3-dicarbonsäureanhydrid, x-Methylnorborn-5-en-2,3-dicarbonsäureanhydrid, Norborn-5-en-2,3-dicarbonsäureanhydrid.

3. Polyolefin-enthaltende Klebstoffmischung nach Anspruch 1, worin die polymerisierbare, ethylenartig-ungesättigte Carbonsäure oder das Derivat davon Maleinsäureanhydrid ist.

4. Polyolefin-enthaltende Klebstoffmischung nach einem der Ansprüche 1 bis 3, worin das Polypropylen ein Homopolymer ist.

5. Polyolefin-enthaltende Klebstoffmischung nach einem der Ansprüche 1 bis 3, worin das Polypropylen ein Propylen/Ethylen-Blockcopolymer ist, das einen Schmelzindex von 2 dg/min (230°C, 2,16 kg) aufweist.

6. Polyolefin-enthaltende Klebstoffmischung nach einem der Ansprüche 1 bis 3, worin das Polypropylen ein Propylen/Ethylen-Zufallscopolymer ist, das einen Schmelzindex von 0,7 dg/min (230°C, 2,16 kg) und eine Dichte von $0,905 g/cm^3$ aufweist oder ein Propylen/Ethylen-Zufallscopolymer ist, das einen Schmelzindex von 6 dg/min (230°C, 2,16 kg) und eine Dichte von $0,9 g/cm^3$ aufweist.

7. Mehrschichtige Struktur, die eine erste, eine Polypropylenzusammensetzung umfassende Schicht und eine zweite, ein polares Material umfassende Schicht umfaßt, wobei die erste Schicht und die zweite Schicht durch eine Zwischenschicht einer Polyolefin-enthaltenden Klebstoffmischung nach einem der Ansprüche 1 bis 6 miteinander verbunden sind.

8. Mehrschichtige Struktur nach Anspruch 7, worin die mehrschichtige Struktur ein durch Coextrudieren produzierter Film ist.

9. Mehrschichtige Struktur nach Anspruch 7 oder Anspruch 8, worin die zweite, ein polares Material umfassende Schicht einen größeren Anteil eines polaren Materials, ausgewählt aus der Gruppe bestehend aus Nylon und Ethylenvinylalkoho-Copolymeren umfaßt.

10. Mehrschichtige Struktur, die eine erste, ein Propylenhomopolymer oder -copolymer umfassende Schicht und eine zweite, ein Ethylenvinylalkohol-Copolymer umfassende Schicht umfaßt, wobei die erste Schicht und die zweite Schicht durch eine Klebstoffmischung, umfassend

(A) 10 bis 30 Gewichtsteile eines Pfropfcopolymers eines Polypropylengerüsts, gepfropft mit 0,01 bis 5 Gew.-% Maleinsäureanhydrid,

(B) 10 bis 50 Gewichtsteile eines linearen Polyethylens niedriger Dichte und,

(C) 20 bis 80 Gewichtsteile Polypropylen, das kein Zufalls-Ethylen/Propylen-Copolymer ist, worin das Ethylen wenigstens etwa 5 Gew.-% dieses Copolymers umfaßt, wobei die Summe von (A), (B) und (C) 100 Gewichtsteile ergibt, miteinander verbunden sind.

11. Mehrschichtige Struktur, die eine erste, ein Propylenhomopolymer oder -copolymer umfassende Schicht, eine zweite Schicht aus einer Klebstoffzusammensetzung, eine dritte Schicht aus einem Ethylenvinylalkohol-Copolymer, eine vierte Schicht aus einer Klebstoffzusammensetzung und eine fünfte Schicht aus einem Propylenhomopolymer oder -copolymer, worin die Klebstoffzusammensetzung eine Polyolefin-enthaltende Klebstoffmischung nach einem der Ansprüche 1 bis 6 ist, umfaßt.

12. Gegenstand hergestellt durch Thermoformen eines mehrschichtigen Films, wobei der Film eine erste, eine Polypropylenzusammensetzung enthaltende Schicht und eine zweite, eine Nylonzusammensetzung oder eine Ethylenvinylalkohol-Copolymer-Zusammensetzung umfassende Schicht, umfaßt, wobei die erste Schicht und die zweite Schicht durch eine Zwischenschicht aus einer Polyolefin-enthaltenden Klebstoffmischung nach einem der Ansprüche 1 bis 6 miteinander verbunden sind.

**Patentansprüche für die Vertragsstaaten: AT, BE, CH, ES, GR, LI, LU, SE**

1. Polyolefin-enthaltende Klebstoffmischung, umfassend:

(A) 10 bis 30 Gewichtsteile eines Pfropfcopolymers eines Polypropylengerüsts gepfropft mit 0,001 bis 30 Gew.-% wenigstens einer polymerisierbaren, ethylenartig-ungesättigten Carbonsäure oder einem Derivat davon,

(B) 10 bis 50 Gewichtsteile eines linearen Polyethylens niedriger Dichte und,

(C) 20 bis 80 Gewichtsteile Polypropylen, das kein Zufalls-Ethylen/Propylencopolymer ist, worin das Ethylen wenigstens etwa 5 Gew.-% dieses Copolymers umfaßt, wobei die Summe von (A), (B) und (C) 100 Gewichtsteile ergibt.

2. Polyolefin-enthaltende Klebstoffmischung nach Anspruch 1, worin die polymerisierbare, ethylenartig-ungesättigte Carbonsäure oder das Derivat davon ausgewählt ist aus der Gruppe bestehend aus Acrylsäure, Methacrylsäure, Maleinsäure, Itakonsäure, Citraconsäure, Mesaconsäure, 4-Methylcyclohex-4-en-1,2-dicarbonsäureanhydrid, Bicyclo (2.2.2) okt-5-en-2,3-dicarbonsäureanhydrid, 1,2,3,4,5,8,9,10-Oktahydro-naphthalen-2,3-dicarbonsäureanhydrid, 2-0xa-1,3-diketospiro (4.4) non-7-en, Bicyclo (2.2.1) hept-5-en-2,3-dicarbonsäureanhydrid, Maleopimarsäure, Tetrahydrophthalsäureanhydrid, x-Methyl-bicyclo (2.2.1) hept-5-en-2,3-dicarbonsäureanhydrid, x-Methylnorborn-5-en-2,3-dicarbonsäureanhydrid, Norborn-5-en-2,3-dicarbonsäureanhydrid.

3. Polyolefin-enthaltende Klebstoffmischung nach Anspruch 1, worin die polymerisierbare, ethylenartig-ungesättigte Carbonsäure oder das Derivat davon Maleinsäureanhydrid ist.

4. Mehrschichtige Struktur umfassend eine erste, eine Polypropylenzusammensetzung umfassende Schicht und eine zweite, ein polares Material umfassende Schicht, wobei die erste Schicht und die zweite Schicht durch eine Zwischenschicht einer Polyolefin-enthaltenden Klebstoffmischung nach einem der Ansprüche 1 bis 3 miteinander verbunden sind.

5. Mehrschichtige Struktur nach Anspruch 4, worin die mehrschichtige Struktur ein durch Coextrudieren produzierter Film ist.

6. Mehrschichtige Struktur nach Anspruch 4 oder Anspruch 5, worin die zweite, ein polares Material umfassende Schicht einen größeren Anteil eines polaren Materials, ausgewählt aus der Gruppe bestehend aus Nylon und EthylenvinylalkoholCopolymeren umfaßt.

7. Mehrschichtige Struktur, die eine erste, ein Propylenhomopolymer oder -copolymer umfassende Schicht und eine zweite, ein Ethylenvinylalkohol-Copolymer umfassende Schicht umfaßt, wobei die erste Schicht und die zweite Schicht durch eine Klebstoffmischung, umfassend

(A) 10 bis 30 Gewichtsteile eines Pfropfcopolymers eines Polypropylengerüsts, gepfropft mit 0,01 bis 5 Gew.-% Maleinsäureanhydrid,

(B) 10 bis 50 Gewichtsteile eines linearen Polyethylens niedriger Dichte und,

(C) 20 bis 80 Gewichtsteile Polypropylen wobei die Summe von (A), (B) und (C) 100 Gewichtsteile ergibt, miteinander verbunden sind.

8. Mehrschichtige Struktur, die eine erste, ein Propylenhomopolymer oder -copolymer umfassende Schicht, eine zweite Schicht aus einer Klebstoffzusammensetzung, eine dritte Schicht aus einem Ethylenvinylalkohol-Copolymer, eine vierte Schicht aus einer Klebstoffzusammensetzung und eine fünfte Schicht aus einem Propylenhomopolymer oder -copolymer, worin die Klebstoffzusammensetzung eine Polyolefin-enthaltende Klebstoffmischung nach einem der Ansprüche 1 bis 3 ist, umfaßt.

9. Gegenstand hergestellt durch Thermoformen eines mehrschichtigen Films, wobei der Film eine erste, eine Polypropylenzusammensetzung enthaltende Schicht und eine zweite, eine Nylonzusammensetzung oder eine EthylenvinylalkoholCopolymer-Zusammensetzung umfassende Schicht, umfaßt, wobei die erste Schicht und die zweite Schicht durch eine Zwischenschicht aus einer Polyolefin-enthaltenden Klebstoffmischung nach einem der Ansprüche 1 bis 3 miteinander verbunden sind.

## Revendications pour les Etats contractants: DE, FR, GB, IT, NL

1. Mélange adhésif contenant des polyoléfines, comprenant
(A) 10 a 30 parties en poids d'un copolymère greffé à squelette de polypropylène sur lequel sont greffés 0,001 à 30% en poids d'au moins un acide carboxylique à insaturation éthylénique polymérisable, ou un dérivé d'un tel acide,
(B) 10 à 50 parties en poids d'un polyéthylène linéaire basse densité et
(C) 20 à 80 parties en poids de polypropylene autre qu'un copolymère statistique éthylane/propylène dans lequel l'éthylène représente au moins environ 5% en poids dudit copolymère, la somme de (A), (B) et (C) étant égale à 100 parties en poids.

2. Mélange adhésif, contenant des polyoléfines, selon la revendication 1, dans lequel l'acide carboxylique à insaturation éthylénique, polymérisable ou le dérivé de celui-ci, est choisi dans le groupe constitué par l'acide acrylique, l'acide méthacrylique, l'acide maléique, l'acide itaconique, l'acide citraconique, l'acide mésaconique, l'anhydride de l'acide méthyl-4 cyclohexène-4 dicarboxylique-1,2, l'anhydride de l'acide bicyclo(2.2.2) octène-5 dicarboxylique-2,3, l'anhydride de l'acide octahydro-1,2,3,4,5,8,9,10 naphtalène dicarboxylique-2,3, oxa-2 dicéto-1,3 spiro(4.4) nonène-7, bicyclo (2.2.1) heptène-5 dicarboxylique-2,3, l'acide maléopimarique, l'anhydride tétrahydrophtalique, l'anhydride de l'acide méthyl-x bicyclo(2.2.1) heptène-5 dicarboxylique-2,3, l'anhydride de l'acide méthyl-x norbornene-5 dicarboxylique-2,3 et l'anhydride de l'acide norbornène-5 dicarboxylique-2,3.

3. Mélange adhésif, contenant des polyoléfines, selon la revendication 1, dans lequel l'acide carboxylique à in saturation éthylénique, polymérisable ou son dérivé est l'anhydride maléique.

4. Mélange adhésif, contenant des polyoléfines, selon l'une quelconque des revendications 1 à 3, dans lequel le polypropylène est un homopolymère.

5. Mélange adhésif, contenant des polyoléfines, selon l'une quelconque des revendications 1 à 3, dans lequel le polypropylène est un copolymère séquencé propylène/éthylène possédant un indice de fusion de 2 dg/min (230°C, 2,16 kg).

6. Mélange adhésif, contenant des polyoléfines, selon l'une quelconque des revendications 1 à 3, dans lequel le polypropylène est un copolymère statistique propylène/éthylène possédant un indice de fusion de 0,7 dg/min (230°C, 2,16 kg) et une masse volumiaue de 0,905 g/cm³ ou un copolymère statistique propylène/éthylène possédant un indice de fusion de 6 dg/min (230°C, 2,16 kg) et une masse volumique de 0.9 g/cm³.

7. Structure multicouche comprenant une première couche comprenant une composition à base de polypropylène et une seconde couche comprenant une matière polaire, la première couche et la seconde couche étant collées entre elles à l'aide d'une couche intermédiaire d'un mélange adhesif, contenant des polyoléfines, tel que défini à l'une quelconque des revendications 1 à 6.

8. Structure multicouche selon la revendication 7, dans laquelle la structure multicouche est un film obtenu par coextrusion.

9. Structure multicouche selon la revendication 7 ou la revendication 8, dans laquelle la seconde couche comprenant une matière polaire comprend une proportion majeure d'une matière polaire choisie dans le groupe constitué par le Nylon et les copolymères éthylène-alcool vinylique.

10. Structure multicouche comprenant une première couche comprenant un homopolymère ou copolymere de propylène et une seconde couche comprenant un copolymère éthylène-alcool vinylique, la première couche et la seconde couche étant collées entre elles à l'aide d'un mélange adhésif comprenant:
(A) 10 à 30 parties en poids d'un copolymère greffé à squelette de polypropylène sur lequel sont greffés 0,01 à 5% en poids d'anhydride maléique.
(B) 10 à 50 parties en poids d'un polyéthylène linéaire basse densité et
(C) 20 à 80 parties en poids de polypropylène autre qu'un eopolymère statistique éthylène/propylène dans lequel l'éthylène représente au moins environ 5% en poids dudit copolymère. la somme de (A), (B) et (C) étant égale à 100 parties en poids.

11. Structure multicouche comprenant une première couche comprenant un homopolymère ou copolymère de propylène, une deuxième couche d'une composition adhésive, une troisième couche d'un eopolymè-

EP 0 258 990 B1

re éthylène-alcool vinylique, une quatrième couche d'une composition adhésive et une cinquième couehe d'un homopolymère ou copolymère de propylène, dans laquelle la composition adhésive est un mélange adhésif, contenant des polyoléfines, tel que défini à l'une quelconque des revendications 1 à 6.

12. Article obtenu par thermoforage d'un film multicouche, lequel film eomprend une première couche comprenant une composition à base de polypropylène et une seconde couche comprenant une composition à base de Nylon ou une composition à base de copolymère éthylène-alcool vinylique, la première couche et la seconde couche étant collées entre elles à l'aide d'une couche intermédiaire d'un mélange adhésif, contenant des polyléfines, tel que défini à l'une quelconque des revendications 1 à 6.


**Revendications pour les Etats contractants: AT, BE, CH, ES, GR, LI, LU, SE**

1. Mélange adhésif contenant des polyoléfines, comprenant

(A) 10 a 30 parties en poids d'un copolymère greffé à squelette de polypropylène sur lequel sont greffés 0,001 à 30% en poids d'au moins un acide carboxylique à insaturation éthylénique polymérisable, ou un dérivé d'un tel acide,

(B) 10 à 50 parties en poids d'un polyéthylène linéaire basse densité et

(C) 20 à 80 parties en poids de polypropylene autre qu'un copolymère statistique éthylane/propylène dans lequel l'éthylène représente au moins environ 5% en poids dudit copolymère, la somme de (A), (B) et (C) étant égale à 100 parties en poids.

2. Mélange adhésif, contenant des polyoléfines, selon la revendication 1, dans lequel l'acide carboxylique à insaturation éthylénique, polymérisable ou le dérivé de celui-ci, est choisi dans le groupe constitué par l'acide acrylique, l'acide méthacrylique, l'acide maléique, l'acide itaconique, l'acide citraconique, l'acide mésaconique, l'anhydride de l'acide méthyl-4 cyclohexène-4 dicarboxylique-1,2, l'anhydride de l'acide bicyclo(2.2.2) octène-5 dicarboxylique-2,3, l'anhydride de l'acide octahydro-1,2,3,4,5,8,9,10 naphtalène dicarboxylique-2,3, oxa-2 dicéto-1,3 spiro(4.4) nonène-7, bicyclo (2.2.1) heptène-5 dicarboxylique-2,3, l'acide maléopimarique, l'anhydride tétrahydrophtalique, l'anhydride de l'acide méthyl-x bicyclo(2.2.1) heptène-5 dicarboxylique-2,3, l'anhydride de l'acide méthyl-x norbornene-5 dicarboxylique-2,3 et l'anhydride de l'acide norbornène-5 dicarboxylique-2,3.

3. Mélange adhésif, contenant des polyoléfines, selon la revendication 1, dans lequel l'acide carboxylique à in saturation éthylénique, polymérisable ou son dérivé est l'anhydride maléique.

4. Structure multicouche comprenant une première couche comprenant une composition à base de polypropylène et une seconde couche comprenantlme matière polaire, la première couche et la seconde couche étant collées entre elles à l'aide d'une couche intermédiaire d'un mélange adhésif, contenant des polyoléfines, tel aue défini à l'une quelconque des revendications 1 à 3.

5. Structure multicouche selon la revendication 4, dans laquelle la structure multicouche est un film obtenu par co-extrusion.

6. Structure multicouche selon la revendication 4 ou la revendication 5, dans laquelle la seconde couche comprenant une matière polaire comprend une proportion majeure d`une matière polaire choisie dans le groupe constitué par le Nylon et les copolymères éthylène-alcool vinylique.

7. Structure multicouche comprenant une première couche comprenant un homopolymère ou copolymère de propylène et une seconde couche comprenant un copolymère éthylène-alcool vinylique, la première couche et la seconde couche étant collées entre elles à l'aide d'un mélange adhésif comprenant:

(A) 10 à 30 parties en poids d'un copolymère greffé à squelette de polypropylène sur lequel sont greffés 0,01 à 5% en poids anhydrique maléique.

(B) 10 à 50 parties en poids d'un polyéthylène lineaire basse densité et

(C) 20 à 80 parties en poids de polypropylène, la somme de (A), (B) et (C) étant égale à 100 parties en poids.

8. Structure multicouche comprenant une première couche comprenant un homopolymère ou copolymère du propylène, une deuxième couche d'une composition adhésive, une troisième couche d'un copolymère éthylène-alcool vinylique, une quatrième couche d'une composition adhésive et une cinquième eouehe d'un homopolymère ou copolymère de propylène, dans laquelle la composition adhésive est un mélange adhésif, contenant des polyoléfines, tel que defini à l'une quelconque des revendications 1 à 3.

9. Article obtenu par thermoformage d'un film multicouche, lequel film comprend une première couche comprenant une composition à base de polypropylène et une seconde couche comprenant une composition à base de Nylon ou une composition à base de copolymère éthylène-alcool vinylique, la première couche et la seconde couche étant collées entre elles à l'aide d'une couche intermédiaire d'un mélange adhésif, contenant des polyléfines, tel que défini à l'une quelconque des revendications 1 à 3.

14